Europäisches Patentamt

European Patent Office

Office européen des brevets

(11) Veröffentlichungsnummer: **0 421 501 A1**

# EUROPÄISCHE PATENTANMELDUNG

(21) Anmeldenummer: 90202197.1

(22) Anmeldetag: 14.08.90

(51) Int. Cl.5: **B01D 53/34**, C10K 1/10, C10J 3/54

(30) Priorität: 08.09.89 DE 3929926

(43) Veröffentlichungstag der Anmeldung:
10.04.91 Patentblatt 91/15

(84) Benannte Vertragsstaaten:
**DE DK ES IT NL**

(71) Anmelder: **METALLGESELLSCHAFT Aktiengesellschaft**
**Reuterweg 14**
**W-6000 Frankfurt am Main(DE)**

(72) Erfinder: **Herbert, Peter, Dr.**
**Frauensteinplatz 15**
**W-6000 Frankfurt am Main(DE)**
Erfinder: **Mielke, Horst**
**Bansastrasse 51**
**W-6078 Neu-Isenburg(DE)**
Erfinder: **Schmitt, Gerhard**
**Weihergrundstrasse 20**
**W-6384 Schmitten(DE)**

(54) **Verfahren zum Behandeln der Gase aus der Vergasung fester, feinkörniger Brennstoffe.**

(57) Feinkörnige Brennstoffe werden im Wirbelzustand mit einem Vergasungsmittelgemisch, das Sauerstoff, Wasserdampf und/oder Kohlendioxid enthält, vergast. Aus dem Produktgas der Vergasung trennt man $NH_3$ weitgehend ab, verbrennt das $NH_3$ oder einen Teil davon und mischt restliches $NH_3$ dem Abgas aus der Verbrennung zu. Vorzugsweise mißt man den Gehalt an Stickstoffoxiden und/oder $NH_3$ im Abgas der Verbrennung und dosiert die Zufuhr von $NH_3$ zur Verbrennung so, daß das Abgas nach der Zumischung von $NH_3$ einen möglichst geringen Gehalt an Stickstoffoxiden und $NH_3$ aufweist.

EP 0 421 501 A1

## VERFAHREN ZUM BEHANDELN DER GASE AUS DER VERGASUNG FESTER, FEINKÖRNIGER BRENNSTOF-FE

Die Erfindung betrifft ein Verfahren zum Behandeln der Gase aus der Vergasung fester, feinkörniger Brennstoffe im wirbelnden Kontakt mit einem Sauerstoff, Wasserdampf und/oder Kohlendioxid enthaltenden Vergasungsmittelgemisch, wobei man aus der Vergasung ein Kohlenoxide, Wasserstoff, Methan und $NH_3$ enthaltendes Produktgas abzieht.

Im Europa-Patent 0 008 469 und im dazu korrespondierenden US-Patent 4 347 064 wird die Vergasung fester, feinkörniger Brennstoffe in der Wirbelschicht beschrieben. Der Erfindung liegt die Aufgabe zugrunde, bei einem solchen oder ähnlichen Verfahren dafür zu sorgen, daß sowohl die Vergasung als auch die Verwendung des Produktgases umweltfreundlich und vor allem ohne Ausstoß störender Mengen an Stickstoffoxiden erfolgen kann. Beim eingangs genannten Verfahren geschieht dies erfindungsgemäß dadurch, daß man aus dem Produktgas der Vergasung $NH_3$ weitgehend abtrennt, das $NH_3$ oder einen Teil davon verbrennt und restliches $NH_3$ dem Abgas aus der Verbrennung zumischt. Hierdurch kann das Abgas weitgehend frei von Stickstoffoxiden gehalten werden, auch wenn große Mengen an $NH_3$ zu vernichten sind.

Die Verbrennung des $NH_3$ erfolgt vorteilhafterweise zusammen mit Zusatzbrennstoff, der fest, flüssig oder gasförmig sein kann. Wenn bei der Vergasung ein kohlenstoffhaltiger Feststoff-Rückstand anfällt, bietet es sich an, diesen Rückstand allein oder mit anderen Brennstoffen als Zusatzbrennstoff einzusetzen.

Eine vorteilhafte Verfahrensweise besteht darin, daß man den Gehalt an Stickstoffoxiden und/oder $NH_3$ im Abgas mißt und die Zufuhr von $NH_3$ zur Verbrennung und zur Vermischung mit dem Abgas so dosiert, daß das Abgas nach der Zumischung von $NH_3$ einen möglichst geringen Gehalt an Stickstoffoxiden und $NH_3$ aufweist. Hierdurch lassen sich auch große Mengen an $NH_3$, die aus dem Produktgas der Vergasung abgetrennt werden, so beseitigen, daß das Abgas ohne störenden Gehalt an Stickstoffoxiden oder $NH_3$ in die Atmosphäre geleitet werden kann. Dies gelingt auch mit einer klein dimensionierten Verbrennungseinrichtung für das $NH_3$.

Aus dem Produktgas der Vergasung trennt man das $NH_3$ bevorzugt so weitgehend ab, daß bei der späteren Verbrennung des Produktgases, z.B. in einem Kraftwerk, keine störenden Mengen an Stickstoffoxiden entstehen. Da das durch Oxidation von $NH_3$ gebildete "chemische $NO_X$" im Rauchgas des Kraftwerks fehlt, ist sein Gehalt an Stickstoffoxiden niedrig.

Die Abtrennung des $NH_3$ aus dem Produktgas erfolgt zweckmäßigerweise durch Auswaschen, insbesondere mit Wasser, da $NH_3$ sehr gut wasserlöslich ist. Das dabei entstehende Ammoniakwasser kann man teilweise direkt in die Verbrennung des Vergasungsrückstandes und den Rest in das dabei gebildete Abgas eindüsen. Eine andere Möglichkeit besteht darin, aus dem Ammoniakwasser das $NH_3$ auszutreiben, was z.B. durch Strippen des Ammoniakwassers mit Wasserdampf geschehen kann. Hierdurch erhält man das $NH_3$ in relativ konzentrierter Form, wodurch die anschließende Verbrennung zu $N_2$, $H_2O$ und $NO_X$ und die Reduktion dieser Stickstoffoxide mit dem restlichen $NH_3$ zu Stickstoff und Wasser im Abgas aus der Verbrennung ermöglicht wird.

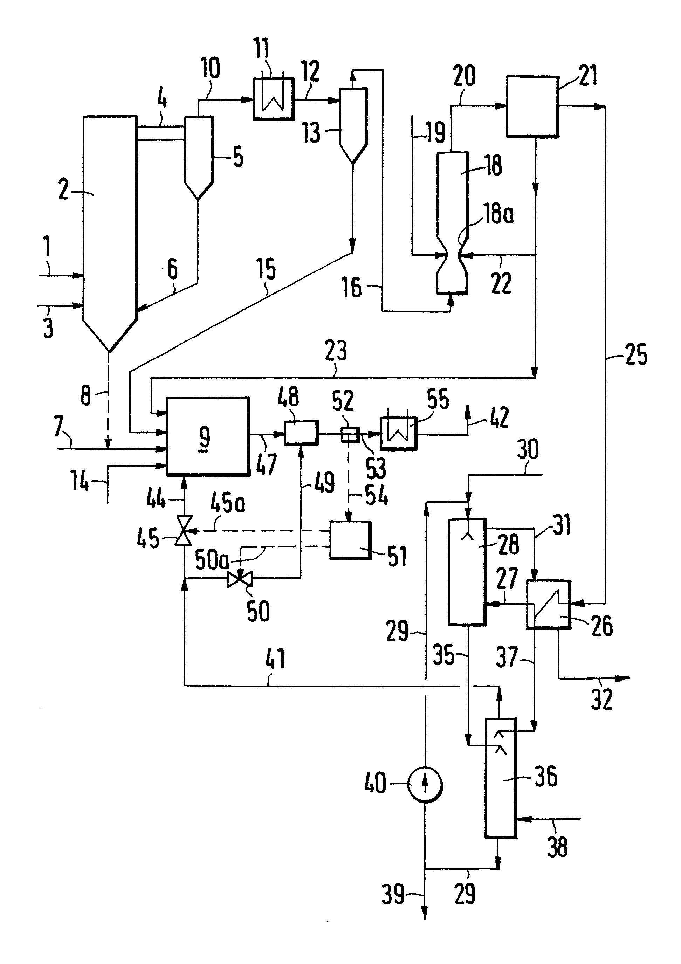

Wenn man die Beseitigung der Stickstoffoxide im Abgas durch Einspritzen von Ammoniakwasser erreichen will, empfiehlt sich eine Arbeitsweise mit Katalysator bei Temperaturen von 200 bis 500° C, dabei verwendet man an sich bekannte Katalysatoren, die z.B. aus $TiO_2$ und Vanadium bestehen können. Will man die Verwendung von Katalysatoren im Abgas vermeiden, so arbeitet man zweckmäßigerweise bei Temperaturen von etwa 700 bis 1200° C und insbesondere von etwa 800° C, wobei man gasförmiges $NH_3$, eventuell gemischt mit Strippdampf, mit dem Abgas vermischt. Ausgestaltungsmöglichkeiten des Verfahrens werden mit Hilfe der Zeichnung erläutert.

Vergast werden feinkörnige bis staubförmige Brennstoffe, insbesondere Kohle, mit Korngrößen unterhalb von etwa 6 mm bei einem Druck im Bereich von 1 bis 120 bar. Bei der Vergasung befinden sich die Brennstoffe im wirbelnden Kontakt mit einem sauerstoffhaltigen Vergasungsmittelgemisch, das Wasserdampf und/oder Kohlendioxid enthält. Als Beispiele für das Vergasungsverfahren seien die Wirbelschicht, die zirkulierende Wirbelschicht oder die Vergasung in der pneumatischen Förderstrecke genannt. Die Kohle wird durch die Leitung (1) dem Vergasungsreaktor (2) zugeführt, in welchen man durch die Leitung (3) auch das sauerstoffhaltige Vergasungsmittelgemisch einleitet. Ein feststoffhaltiges Produktgas gelangt durch den Kanal (4) in einen Zyklon (5), in welchem die Feststoffe weitgehend abgetrennt und durch die Leitung (6) zum Reaktor (2) zurückgeführt werden. Falls der Feststoff-Rückstand der Vergasung noch genügend Kohlenstoff enthält, wird er in der Leitung (8) abgezogen und einer Verbrennung (9) aufgegeben. Zusatzbrennstoff für die Verbrennung (9) kommt aus der Leitung (7) und Verbrennungsluft wird in der Leitung (14) herangeführt. Die Verbrennung (9), die eine nur relativ geringe Brennstoffmenge zu verarbeiten hat, kann in an sich bekannter Weise z.B. als Wirbelschicht, zirkulierende Wirbelschicht, Wanderrost, Schmelzfeuerung oder Gasbrenner ausgebildet sein.

Das Produktgas aus dem Zyklon (5) gelangt in der Leitung (10) zunächst zu einem Wärmeaustauscher (11), z.B. einem Abhitzekessel, in welchem das mit Temperaturen von 700 bis 1500°C ankommende Gas auf Temperaturen von etwa 200 bis 500°C gekühlt wird. Das gekühlte Gas strömt durch die Leitung (12) zu einem weiteren Zyklon (13), in welchem erneut Feststoffe abgetrennt werden. Diese Feststoffe gibt man in der Leitung (15) bevorzugt ebenfalls der Verbrennung (9) auf.

Das von Feststoffen weitgehend befreite Gas, das den Zyklon (13) in der Leitung (16) verläßt, weist neben Kohlenoxiden, Wasserstoff und möglicherweise geringe Mengen an Methan vor allem noch $NH_3$, weitere N-Verbindungen und auch Halogenverbindungen auf. Deshalb führt man das Gas zunächst dem Enthalogenierungsreaktor (18) zu, dem man durch die Leitung (19) auch $Ca(OH)_2$ und/oder CaO bevorzugt in fester, feinteiliger Form aufgibt. Dadurch entstehen im Reaktor (18) Calciumhalogenide, vor allem Calciumchlorid und Calciumfluorid, die mit dem Gas durch die Leitung (20) zu einem Filter (21) geführt werden. Hier trennt man die Feststoffe, die nicht reagiertes $Ca(OH)_2$ und/oder CaO enthalten, ab, führt einen Teil davon durch die Leitung (22) zurück zum Reaktor (18) und gibt einen Überschuß der Feststoffe durch die Leitung (23) ebenfalls der Verbrennung (9) auf. Für das Filter (21) eignet sich z.B. ein Elektrofilter oder aber ein Schlauchfilter. Um den Gas-Feststoff-Kontakt zu verbessern, weist der Reaktor (18) einen Bereich (18a) mit verengtem Innenquerschnitt auf, der einen Venturieffekt mit verstärkter Verwirbelung erzeugt.

Das im Filter (21) gereinigte Produktgas, das üblicherweise Temperaturen von etwa 200 bis 500°C aufweist, enthält nun noch störende Mengen an $NH_3$. Das Produktgas wird in der Leitung (25) zu einem Wärmeaustauscher (26) geführt, dort gekühlt und durch die Leitung (27) einer Wasserwäsche im Waschbehälter (28) aufgegeben. Ammoniakhaltiges Kreislaufwasser wird in der Leitung (29) herangeführt, falls nötig, kommt Frischwasser aus der Leitung (30). Das Gas wird im Behälter (28) mit dem Wasser berieselt, wobei der Kontakt zwischen Gas und Wasser durch an sich bekannte Stoffaustauschelemente verbessert werden kann. Das von $NH_3$ nun weitgehend befreite Produktgas verläßt den Waschbehälter durch die Leitung (31), wird im Wärmeaustauscher (26) angewärmt und durch die Leitung (32) der weiteren Verwendung zugeführt. Das Gas in der Leitung (32) kann z.B. in ein Kraftwerk geführt werden, wo es verbrannt und durch eine Turbine geleitet wird. Da das Gas arm an $NH_3$ ist und z.B. nur noch höchstens 20 ppm $NH_3$ enthält, entstehen bei der Verbrennung kaum noch Stickstoffoxide, so daß das Rauchgas direkt in die Atmosphäre geleitet werden kann.

Das aus dem Waschbehälter (28) in der Leitung (35) ablaufende Ammoniakwasser wird einer Strippkolonne (36) zugeführt, in welche man auch im Wärmeaustauscher (26) anfallendes Kondensat durch die Leitung (37) leitet. Als Strippmedium dient z.B. Wasserdampf, den man in der Leitung (38) heranführt. Behandeltes, von Ammoniak weitgehend befreites Wasser führt man durch die Leitung (29) mit Hilfe der Pumpe (40) zurück zum Waschbehälter (28), überschüssiges Wasser entfernt man durch die Leitung (39).

$NH_3$-haltiger Strippdampf wird am Kopf der Strippkolonne (36) durch die Leitung (41) abgezogen und dient dazu, für ein von Stickstoffoxiden und $NH_3$ praktisch freies Abgas in der Leitung (42) zu sorgen. Zu diesem Zweck leitet man einen Teil des $NH_3$-Strippdampf-Gemisches durch die Leitung (44) und das Regelventil (45) in die Verbrennung (9). Dabei wird das $NH_3$ teilweise oder ganz, je nach Typ der Verbrennungsanlage, zu $NO_X$ verbrannt. Dem $NO_X$-haltigen Abgas, das die Verbrennung (9) in der Leitung (47) verläßt, gibt man in der Mischzone (48) durch die Leitung (49) und das Regelventil (50) das restliche $NH_3$-Strippdampf-Gemisch zu. Dabei sorgt man durch die Regeleinrichtung (51) dafür, daß das die Mischzone (48) verlassende Abgas praktisch frei von $NO_X$ und auch frei von überschüssigem $NH_3$ ist. Dies wird durch eine Meßeinrichtung (52) überwacht, welche ihre Meßwerte durch die Signalleitung (54) der Regeleinrichtung (51) mitteilt. Die Regeleinrichtung (51) sorgt über die Signalleitungen (45a) und (50a) dafür, daß das $NH_3$-Strippdampf-Gemisch im richtigen Verhältnis auf die Leitungen (44) und (49) verteilt wird, so daß das Abgas in der Leitung (53) in gewünschter Weise praktisch frei von $NH_3$ und $NO_X$ ist. Das Abgas wird im Wärmeaustauscher (55) gekühlt und durch die Leitung (42) in die Atmosphäre geleitet. Durch die Aufspaltung der in der Leitung (41) herangeführten $NH_3$-Menge auf eine Leitung, die direkt in die Verbrennung (9) führt, und eine zweite Leitung (49), die in das Abgas aus der Verbrennung mündet, können auch große $NH_3$-Mengen unschädlich gemacht und in die die Umwelt nicht belastenden Komponenten Stickstoff und Wasser umgewandelt werden.

Abweichend von der Zeichnung kann man einen Überschuß an Ammoniakwasser aus der Leitung (35), den man nicht zurück auf den Kopf des Waschbehälters (28) geben will, direkt über die Leitung (41) sowie durch die Zweigleitungen (44) und (49) teilweise in die Verbrennung (9) und den Rest in die Mischzone (48) einsprühen.

Beispiel

In einer der Zeichnung entsprechenden Verfahrensführung, wobei man jedoch auf den Enthalogenierungsreaktor (18) und das Filter (21) verzichtet, wird wie folgt gearbeitet; die Daten sind teilweise berechnet. Eine Kohle mit der Körnung 0 bis 6 mm und der Analyse

| C | 60,0 Gew.-% |
|---|---|
| H | 4,0 Gew.-% |
| O | 9,0 Gew.-% |
| N | 1,5 Gew.-% |
| S | 0,7 Gew.-% |
| $H_2O$ | 18,0 Gew.-% |
| Asche | 6,8 Gew.-% |

wird in einem Reaktor nach dem Prinzip der zirkulierenden Wirbelschicht unter einem Druck von 22 bar vergast. Pro Stunde werden 36,5 t Kohle zusammen mit 85 500 kg Luft und 2 800 kg Wasserdampf dem Reaktor aufgegeben.

Die nachfolgende Tabelle gibt Gasmengen, trocken gerechnet, sowie die zugehörigen Temperaturen an:

| Leitung | 10 | 25 | 38 | 41 |
|---|---|---|---|---|
| Gasmenge ($Nm^3/h$) | 100 000 | 100 000 | 2 500 | 1 800 |
| Temperatur (°C) | 920 | 350 | 170 | 100 |
| Leitung | 44 | 49 | 53 | |
| Gasmenge ($Nm^3/h$) | 1 500 | 300 | 45 000 | |
| Temperatur (°C) | 100 | 100 | 350 | |

Das Produktgas der Leitung (10) ist, trocken gerechnet, wie folgt zusammengesetzt:

| $CO_2$ | 7,5 Vol.-% |
|---|---|
| CO | 22,2 Vol.-% |
| $H_2$ | 15,7 Vol.-% |
| $CH_4$ | 2,6 Vol.-% |
| $N_2$ | 52,0 Vol.-% |

Dieses Gas enthält pro $Nm^3$ (trocken gerechnet) 2 300 mg $NH_3$. Einer Wirbelschichtverbrennung (9) gibt man durch die Leitungen (7) und (15) insgesamt pro Stunde 9 t Feststoffrückstand aus der Vergasung auf, dessen Kohlenstoffgehalt bei etwa 50 Gew.-% liegt. Zusätzlicher Brennstoff ist nicht erforderlich. Aus der Verbrennung mit Luft entstehen etwa 45 000 $Nm^3/h$ Rauchgas.

Der Strippkolonne (36) führt man durch die Leitung (38) Wasserdampf als Strippmedium zu und erhält in der Leitung (41) ein Gasgemisch, das aus 16,5 Vol.-% $NH_3$, 16,5 Vol.-% $CO_2$ und 67 Vol.-% $H_2O$ besteht. Das Abgas in der Leitung (53) weist einen Gehalt an $NO_x$ von unter 100 ppm und an $NH_3$ von unter 5 ppm auf.

## Ansprüche

1. Verfahren zum Behandeln der Gase aus der Vergasung fester, feinkörniger Brennstoffe im wirbelnden Kontakt mit einem Sauerstoff, Wasserdampf und/oder Kohlendioxid enthaltenden Vergasungsmittelgemisch, wobei man aus der Vergasung ein Kohlenoxide, Wasserstoff, Methan und $NH_3$ enthaltendes Produktgas abzieht, dadurch gekennzeichnet, daß man aus dem Produktgas der Vergasung $NH_3$ weitgehend abtrennt,

das $NH_3$ oder einen Teil davon verbrennt und restliches $NH_3$ dem Abgas aus der Verbrennung zumischt.

2. Verfahren nach Anspruch 1, dadurch gekennzeichnet, daß man das $NH_3$ oder einen Teil davon mit Zusatzbrennstoff verbrennt.

3. Verfahren nach Anspruch 2, dadurch gekennzeichnet, daß man als Zusatzbrennstoff einen kohlenstoffhaltigen Feststoff-Rückstand aus der Vergasung verwendet.

4. Verfahren nach Anspruch 1 oder einem der folgenden, dadurch gekennzeichnet, daß man den Gehalt an Stickstoffoxiden und/oder $NH_3$ im Abgas der Verbrennung mißt und die Zufuhr von $NH_3$ zur Verbrennung und zur Vermischung mit dem Abgas so dosiert, daß das Abgas nach der Zumischung von $NH_3$ einen möglichst geringen Gehalt an Stickstoffoxiden und $NH_3$ aufweist.

5. Verfahren nach Anspruch 1 oder einem der folgenden, dadurch gekennzeichnet, daß man das $NH_3$ aus dem Produktgas mit Wasser auswäscht und das gebildete Ammoniakwasser teilweise in die Verbrennung und teilweise in das Abgas eindüst.

6. Verfahren nach Anspruch 1 oder einem der folgenden, dadurch gekennzeichnet, daß man das $NH_3$ aus dem Produktgas mit Wasser auswäscht, aus dem gebildeten Ammoniakwasser das $NH_3$ ausstrippt und das $NH_3$-haltige Gasgemisch aus der Strippung zum Teil in die Verbrennung und zum Teil in das Abgas leitet.

Europäisches
Patentamt

**EUROPÄISCHER
RECHERCHENBERICHT**

Nummer der Anmeldung

**EP 90 20 2197**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 824 534  (HITACHI LTD)<br>– – – | | B 01 D<br>53/34<br>C 10 K 1/10<br>C 10 J 3/54 |
| A | DE-A-1 926 629  (Dr. G. WUNDERLICH)<br>– – – | | |
| A | WO-A-8 904 210  (SHIKADA et al.)<br>– – – | | |
| A | DE-A-3 715 746  (SIEMENS AG)<br>– – – | | |
| A | EP-A-0 264 041  (VON ROLL AG)<br>– – – | | |
| A | EP-A-0 356 554  (MAN GUTEHOFFNUNGSHÜTTE AG)<br>– – – – – | | |

RECHERCHIERTE
SACHGEBIETE (Int. Cl.5)

B 01 D
C 10 K
C 10 J

Der vorliegende Recherchenbericht wurde für alle Patentansprüche erstellt

| Recherchenort | Abschlußdatum der Recherche | Prüfer |
|---|---|---|
| Den Haag | 24 Januar 91 | PYFFEROEN K. |